# NEW EUROPEAN PATENT SPECIFICATION

(11) **EP 1 272 266 B2**
(45) Date of publication and mention of the opposition decision: **15.07.2009**
(45) Mention of the grant of the patent: 04.10.2006
(21) Application number: 01921695.1
(22) Date of filing: 02.04.2001
(51) Int. Cl.: B01J 3/06

(54) **HIGH TEMPERATURE/HIGH PRESSURE COLOUR CHANGE OF DIAMOND**
HOCHTEMPERATUR/HOCHDRUCK-FARBEVERÄNDERUNG VON DIAMANTEN
CHANGEMENT DE COULEUR DE DIAMANT PAR HAUTE TEMPERATURE/HAUTE PRESSION

(30) Priority: 31.03.2000 GB 0007890
(43) Date of publication of application: 08.01.2003
(73) Proprietor: Element Six Technologies (PTY) LTD, Nuffield Springs (ZA)
(72) Inventor: BURNS, Robert, Charles, 2195 Northcliff (ZA); FISHER, David, Maidenhead Berkshire SL6 5EP (GB); SPITS, Raymond, Anthony, 2194 Bordeaux (ZA)
(74) Representative: Talbot-Ponsonby, Daniel Frederick
(86) International application number: PCT/IB2001/000526
(87) International publication number: WO 2001/072405

(56) References cited:
- WO-A-01/14050
- GB-A- 1 578 987
- US- - 6 692 714
- ALAN T. COLLINS ET AL.: "Colour changes produced in natural brown diamonds by high-pressure, high-temperature treatment" DIAMOND AND RELATED MATERIALS, vol. 9, no. 2, March 2000 (2000-03), pages 113-122, XP004195517 AMSTERDAM., NL ISSN: 0925-9635
- K. SCHMETZER : "BEHANDLUNG NATUERLICHER DIAMANTEN ZUR REDUZIERUNG DER GELB- ODER BRAUNSAETTIGUNG" GOLDSCHMIEDE ZEITUNG, vol. 97, no. 5, 1999, pages 47-48, XP000997186 stuttgart, de ISSN: 0017-1689
- A. V. NIKITIN ET AL.: "The Effect of Heat and Pressure on Certain Physical Properties of Diamonds" SOVIET PHYSICS - DOKLADY, vol. 13, no. 7, January 1969 (1969-01), pages 842-844, XP001019666 New York, US
- S. C. LAWSON & H. KANDA: "Nickel in Diamond: An Annealing Study" DIAMOND AND RELATED MATERIALS., vol. 2, 1993, pages 130-135, XP001015642 ELSEVIER SCIENCE PUBLISHERS, AMSTERDAM., NL ISSN: 0925-9635
- T. EVANS & P. RAINEY: "CHANGES IN THE DEFECT STRUCTURE OF DIAMOND DUE TO HIGH TEMPERATURE +HIGH PRESSURE TREATMENT" PROCEEDINGS OF THE ROYAL SOCIETY OF LONDON, vol. 344, 1975, pages 111-130,A,B, XP000965244 London, GB ISSN: 0080-4649
- T.M.MOSES ET AL: 'Observations on GE processed Diamonds:A Photographic Record' GEMS AND GEMOLOGY vol. 35, no. 3, 1999, pages 14 - 22
- MARTIN RAPAPORT: 'GE/LKI Support-Disclosure and Detection' 04 October 1999, Retrieved from the Internet: <URL:www.diamonds.net>
- GEMKEY: 'LKI/GE Process announced at GemFest Asia 99' 27 September 1999, Retrieved from the Internet: <URL:www.gemkey.com>
- MARTIN RAPAPORT: 'GE Using Technology to Perfect Nature' 01 October 1999, Retrieved from the Internet: <URL:www.diamonds.net>
- J. VAN ROYEN ET AL.: 'Diamond: Natural,Treated or Synthetic?' ANTWERP FACETS vol. 32, September 1999, pages 6 - 15
- COLLINS ET AL.: 'Colour changes produced in natural brown diamond by high-pressure,high-temperature treatment' DIAMOND AND RELATED MATERIALS vol. 9, 2000, pages 113 - 122
- 1991, BUTTERWORTH-HEINEMANN article JOHN AND EILEEN WILKS: 'Properties and Applications of Diamond (pp 167-168)', pages 81 - 82
- 1979, ACADEMIC PRESS article J.E. FIELD: 'The Properties of Diamond', pages 31 - 33
- 'nr 10460996' GEMOLOGICAL INSTITUTE OF AMERICA CERTIFICAITON 28 September 1998,
- DAVIES ET AL.: 'Vacancy-related centres in diamond' PHYSICAL REVIEW vol. 40, no. 20, 1992, page 13157
- FISHER AND SPITS: 'Spectroscopic Evidence of GE POL HPHT-Treated Natural Type IIa Diamonds' GEMS & GEMOLOGY 2000, pages 42 - 49
- M.B. KIRKLEY ET AL.: 'Age,Origin and Emplacement of Diamonds:Scientific Advances in the Last Decade' GEMS & GEMOLOGY 1991, pages 2 - 25
- GEMS & GEMOLOGY vol. 35, no. 4, 1999, pages 203 - 204
- RAPAPORT/DIAMOND REPORT vol. 33, no. 1, 07 January 2000, pages 28 - 30

## Description

### BACKGROUND TO THE INVENTION

This invention relates to a method of changing the colour of a diamond, including the steps of creating a reaction mass by providing the diamond in a pressure transmitting medium which completely encloses the diamond, and subjecting the reaction mass to high temperature and pressure for a suitable period of time.

Diamonds are generally classified into four main types: Ia, Ib, IIa and IIb. These types are usually distinguished by infrared and ultraviolet spectra. Type Ia and Ib diamonds contain nitrogen in a combination of different forms. Type Ib contains single substitutional nitrogen or C-centres. Type Ia contains a combination of various nitrogen structures. Type IIa diamonds have a nitrogen content of less than a few parts per million (ppm) and can be defined as those diamonds which show substantially no absorption in the 1332 - 400 cm⁻¹ range when irradiated with infrared radiation. Type IIa diamond can exhibit a brown colour caused, it is believed, by structural deformation within the diamond crystal lattice. Type IIb diamonds have a nitrogen concentration of less than a few parts per million and a concentration of nitrogen defects so as to give rise to uncompensated p-type semi-conductor behaviour. The absorption of the diamond in the visible region decreasing in strength with decreasing wavelength, gives rise to a blue colour.

A combination of blue colour due to boron and brown colour due to structural deformation in type IIb diamonds leads to a bluish-grey to brownish-grey colour depending upon the relative strengths of the respective absorption.

US 4, 124,690 describes a process for converting type Ib nitrogen into type Ia nitrogen in type Ib diamond by high temperature annealing under a pressure which prevents graphitisation. This treatment has the effect of reducing the yellow colour of the type Ib diamond.

### SUMMARY OF THE INVENTION

According to the present invention, there is provided a method as set forth in Claim 1. The remaining claims set forth preferred or optional features of the invention.

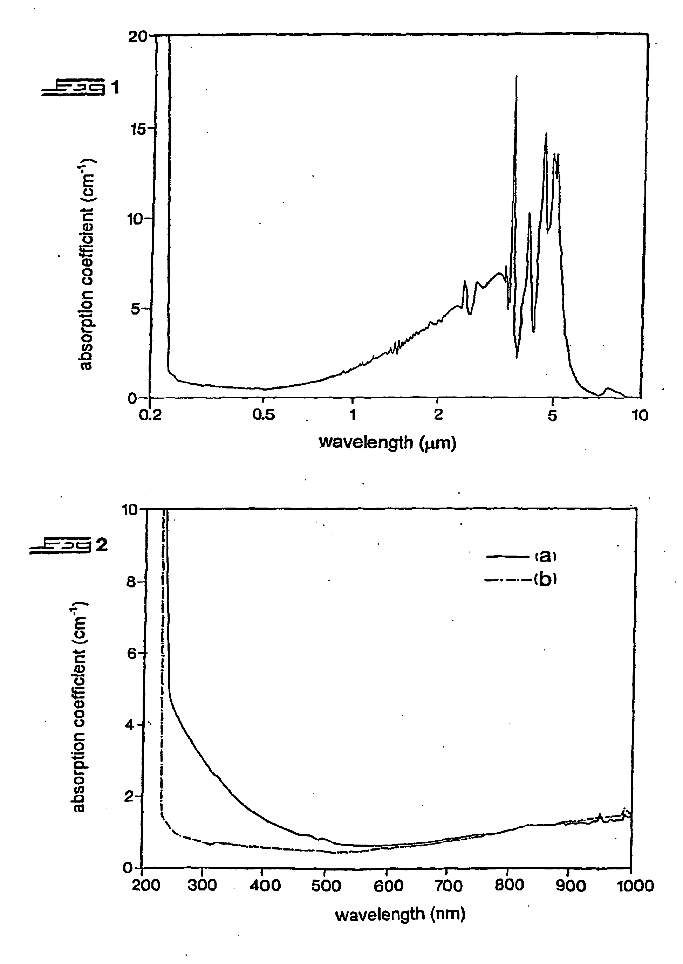

Type IIb diamonds have a nitrogen concentration of less than a few parts per million, and a concentration of substitutional boron atoms which is greater than the concentration of nitrogen defects so as to give rise to uncompensated p-type semiconducting behaviour. A typical infrared, visible and ultraviolet absorption spectrum of type IIb diamond is shown in Figure 1. The present invention has application to type IIb diamond which is of a grey colour. The grey colour may range from grey to brownish grey, the spectrum of which exhibits an absorption monotonically increasing in strength when decreasing wavelength as shown in Figure 2 in graph line a. After the diamond has been subjected to the heat treatment of the invention, the blue colour is produced or enhanced and the diamond will have a spectrum which shows a reduction in absorption in the low wavelengths as shown in Figure 2 in graph line b.

The blue colour in the diamond is enhanced by using an annealing temperature ranging from 2000°C to 2500°C for a period of time ranging from 10 minutes to 15 hours. Generally, the higher the annealing temperature the shorter the period of anneal. Preferably, the annealing temperature is 2200°C to 2500°C, under a pressure ranging from 6,7GPa to 9GPa, and preferably 7,6GPa to 8,4GPa, for a period of preferably 1 hour. Examples of suitable annealing conditions are:
2500°C for 1 hour
2500°C for 10 minutes
2100°C for 20 hours
2300°C for 5 hours

### DESCRIPTION OF EMBODIMENTS

In the present invention, a grey to brownish grey type IIb diamond crystal, which will generally be natural diamond, is annealed under a pressure which prevents significant graphitisation in order to modify the structural deformation in the diamond which gives rise to the brown colouration, thereby reducing the brown colouration and enhancing the blue colour of the diamond. In some cases the initial boron concentration is so low that the absorption is dominated by a component causing the brown colour resulting in a brown diamond. Further, in some cases the boron is not detectable in absorption in the initial diamond probably due to an effect called charge compensation. It is to be understood that both such diamonds are included in the term "grey type IIb diamond" as used herein and in the claims.

Blue natural diamonds are rare. Thus, the present invention provides a method of enhancing the blue colour of a natural type IIb diamond without causing damage to the diamond crystal.

The change in colour of the type IIb diamond crystal can be quantified by the changes in the absorption spectrum of the crystal taken before and after annealing. Spectra are taken of the crystal at room temperature by means of a spectrometer in a conventional manner showing the ultraviolet / visible absorption spectrum of the crystal. After the crystal is annealed, spectra are taken of it again at room temperature. Subjecting type IIb diamond crystals to the annealing method of the invention results in a reduction of the strength of the monotonically rising absorption leaving dominant absorption at longer wavelengths so enhancing the blue colour. The annealing method of the invention also has the effect of increasing the concentration of uncompensated boron. This also contributes to enhancing the blue colour.

In the method of the invention, a reaction mass is created by providing diamond in a pressure transmitting medium which completely encloses a diamond. The pressure transmitting medium is preferably a homogeneous pressure transmitting medium which evenly spreads the pressure which is applied over the entire surface of the diamond which is being treated. Examples of suitable mediums are those which have a low shear strength such as metal halide salts. Examples of suitable metal halide salts are potassium bromide, sodium chloride, potassium chloride, caesium chloride, caesium bromide, copper chloride and copper bromide. Such mediums have been found to provide the desirable even spread of pressure which ensures that any graphitisation which may occur on the diamond surface is kept to a minimum. A particular advantage of using a metal halide salt as the pressure transmitting medium is that the diamonds can be easily recovered after treatment by dissolving the medium in hot water.

The method of the invention may be used to treat a single diamond or a plurality of discrete diamonds. If a plurality of discrete diamonds are treated simultaneously, each diamond should be separated from its neighbours by the pressure transmitting medium. The maximum volume of diamond which may be treated is limited only by the capacity of the high pressure/high temperature apparatus used.

Conventional high temperature/high pressure apparatus may be used in the method of the invention. Various reaction vessel configurations which provide for indirect or direct heating of the reaction mass are disclosed in the patent literature and are useful in carrying out the present annealing process. These reaction vessels usually consist of a plurality of interfitting cylindrical members and end plugs or discs for containing the reaction mass in the centremost cylinder. In the indirectly heated type of reaction vessel one of the cylindrical members is made of graphite which is heated by the passage of electric current therethrough and which thereby heats the reaction mass. In the directly heated type of reaction vessel, the reaction mass is electrically conductive, thereby eliminating the need for an electrically conductive graphite cylinder, and electric current is passed directly through the reaction mass to heat it.

The invention is illustrated by the following examples.

### EXAMPLE 1

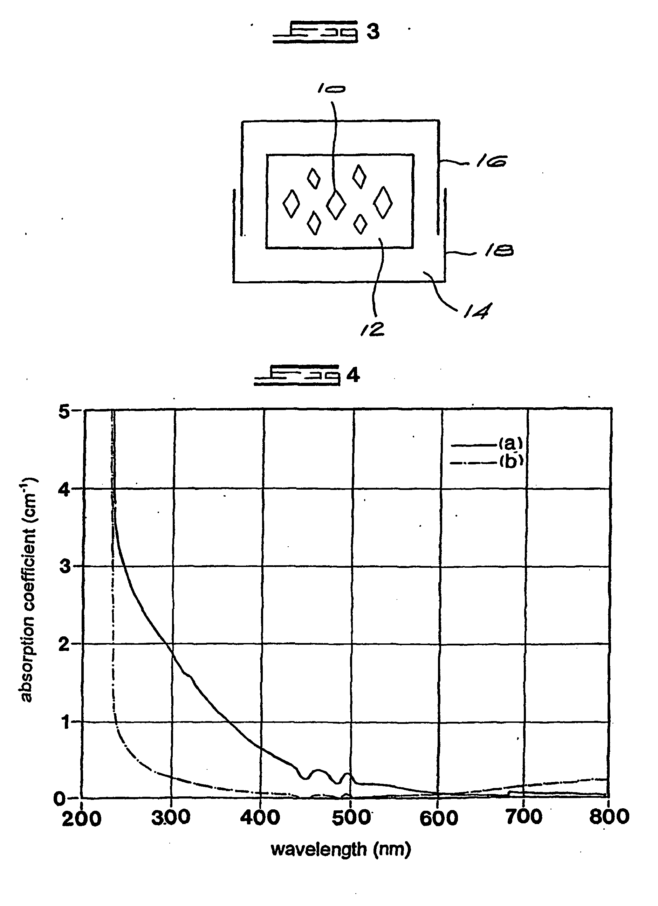

A natural brownish grey type IIb diamond, with the ultraviolet / visible absorption spectrum before treatment shown in Figure 2 in graph line a, was used. A plurality of such diamonds were placed in a pressure transmitting medium in a reaction vessel of the type illustrated by Figure 3. Referring to this figure, the diamond crystals 10 are placed in a pressure transmitting medium 12 such that the crystals are discrete and separated from each other in the pressure transmitting medium. The diamonds are preferably evenly dispersed in the medium. The pressure transmitting medium is preferably a low shear strength medium of the type described above. The diamond-containing medium 12 is placed in a container 14 made of graphite, pyrophyllite, magnesium oxide, or zirconium oxide, which is enclosed by cooperating cups 16, 18 which form a metal canister around the container 14. The metal may be molybdenum, tantalum or steel. The canister may be compacted around the container to eliminate air voids. The loaded canister is now placed in the reaction zone of a conventional high temperature/high pressure apparatus. The contents of the capsule were subjected to a temperature of 2200°C and a pressure of 7,6GPa which conditions were maintained for a period of 12 hours. The capsule was removed from the apparatus and allowed to cool. The canister and graphite container were removed and the diamonds recovered from the medium. The ultraviolet / visible absorption spectrum of the diamond after treatment is shown in Figure 2 in graph line b. The spectrum shows the reduction in the brown background after annealing. As the absorption spectrum is now dominated by an absorption in the red end of the spectrum, decreasing with decreasing wavelength, the diamond appears blue.

### EXAMPLE 2

A natural brownish grey type IIb diamond was treated in the manner generally set out in Example 1, save that the annealing temperature was 2500°C at the same pressure indicated in Example 1, and these conditions were maintained for a period of 1 hour. The ultraviolet / visible absorption spectrum before treatment is shown in Figure 4 in graph line a, whilst the ultraviolet / visible absorption spectrum of the diamond after treatment is shown in Figure 4 in graph line b. The spectrum again shows a reduction in the brown background after annealing. Further, the increased adsorption in the red part of the visible spectrum so deepening the blue colour is caused, in part, by an increase in the concentration of uncompensated boron.

## Claims

1. A method of changing the colour of a grey type IIb diamond to blue or enhancing the blue colour of a type IIb diamond, including the steps of:
(i) creating a reaction mass by providing the diamond in a pressure transmitting medium which completely encloses the diamond; and
(ii) subjecting the reaction mass to a temperature in the range 2000° C to 2500°C under a pressure of 6.7 GPa to 9 GPa for a period of time ranging from 10 minutes to 15 hours.

2. A method according to claim 1, wherein in step (ii) the reaction mass is subjected to the temperature and pressure for about 1 hour.

3. A method according to any of claim 1 or 2, wherein the temperature in step (ii) is 2200°C to 2500°C.

4. A method according to any of the preceding claims, wherein the pressure in step (ii) is from 7.6 GPa to 8.4 GPa.

5. A method according to any of the preceding claims, wherein before the diamond has been subjected to the temperature and pressure, the ultraviolet/visible spectrum of the diamond exhibits an absorption monotonically increasing in strength with decreasing wavelength, and wherein after the diamond has been subjected to the temperature and pressure, the diamond has a spectrum which shows a reduction in absorption in the low wavelengths.

6. A method according to claim 5, wherein after the diamond has been subjected to the temperature and pressure, the diamond has a spectrum which shows an increased absorption in the red part of the visible spectrum caused in part by an increase in the concentration of uncompensated boron.

7. A method according to any of the preceding claims, wherein a plurality of diamonds is placed in the pressure transmitting medium, each diamond being separated from its neighbour by pressure transmitting medium.

8. A method according to any of the preceding claims, wherein the pressure transmitting medium is a homogeneous medium which completely encloses the or each diamond and is applied over the entire surface of the or each diamond.

9. A method according to any of the preceding claims, wherein the pressure transmitting medium has a low shear strength.

10. A method according to any of the preceding claims, wherein the pressure transmitting medium is water soluble.

11. A method according to any of the preceding claims, wherein the pressure transmitting medium is a metal halide salt.

12. A method according to claim 11, wherein the halide is chloride or bromide.

13. A method according to any of claims 1 to 8, wherein the pressure transmitting medium is potassium bromide.

14. A method according to any of claims 1 to 8, wherein the pressure transmitting medium is sodium chloride.

15. A method according to any of claims 1 to 8, wherein the pressure transmitting medium is potassium chloride.

16. A method according to any of claims 1 to 8, wherein the pressure transmitting medium is caesium chloride.

17. A method according to any of claims 1 to 8, wherein the pressure transmitting medium is caesium bromide.

18. A method according to any of claims 1 to 8, wherein the pressure transmitting medium is copper chloride.

19. A method according to any of claims 1 to 8, wherein the pressure transmitting medium is copper bromide.

## Patentansprüche

1. Verfahren zur Änderung der Farbe eines grauen Diamanten vom Typ IIb nach blau oder Verstärken der blauen Farbe eines Diamanten vom Typ IIb, mit den folgenden Schritten:
(i) Erzeugen einer Reaktionsmasse durch Bereitstellen des Diamanten in einem druckübertragenden Medium, das den Diamanten vollständig einschließt; und
(ii) Einwirkenlassen einer Temperatur im Bereich von 2000°C bis 2500°C auf die Reaktionsmasse unter einem Druck von 6,7 GPa bis 9 GPa während eines Zeitraums von 10 Minuten bis 15 Stunden.

2. Verfahren nach Anspruch 1, wobei im Schritt (ii) die Reaktionsmasse während etwa 1 Stunde der Temperatur und dem Druck ausgesetzt wird.

3. Verfahren nach einem der Ansprüche 1 oder 2, wobei die Temperatur im Schritt (ii) 2200°C bis 2500°C beträgt.

4. Verfahren nach einem der vorstehenden Ansprüche, wobei der Druck im Schritt (ii) 7,6 GPa bis 8,4 GPa beträgt.

5. Verfahren nach einem der vorstehenden Ansprüche, wobei vor der Temperatur- und Druckeinwirkung auf den Diamanten das Spektrum des Diamanten im ultravioletten/sichtbaren Bereich eine Absorption aufweist, deren Stärke mit abnehmender Wellenlänge monoton zunimmt, und wobei nach der Temperatur- und Druckeinwirkung auf den Diamanten der Diamant ein Spektrum mit verminderter Absorption bei den kurzen Wellenlängen aufweist.

6. Verfahren nach Anspruch 5, wobei nach der Temperatur- und Druckeinwirkung auf den Diamanten der Diamant ein Spektrum mit erhöhter Absorption im roten Teil des sichtbaren Spektrums aufweist, die zum Teil durch eine Zunahme der Konzentration von nicht kompensiertem Bor verursacht wird.

7. Verfahren nach einem der vorstehenden Ansprüche, wobei mehrere Diamanten in das druckübertragende Medium eingebracht werden, wobei jeder Diamant durch druckübertragendes Medium von seinem Nachbarn getrennt ist.

8. Verfahren nach einem der vorstehenden Ansprüche, wobei das druckübertragende Medium ein homogenes Medium ist, das den oder jeden Diamanten vollständig einschließt und über der gesamten Oberfläche des oder jedes Diamanten aufgebracht wird.

9. Verfahren nach einem der vorstehenden Ansprüche, wobei das druckübertragende Medium eine niedrige Scherfestigkeit aufweist.

10. Verfahren nach einem der vorstehenden Ansprüche, wobei das druckübertragende Medium wasserlöslich ist.

11. Verfahren nach einem der vorstehenden Ansprüche, wobei das druckübertragende Medium ein Metallhalogenidsalz ist.

12. Verfahren nach Anspruch 11, wobei das Halogenid Chlorid oder Bromid ist.

13. Verfahren nach einem der Ansprüche 1 bis 8, wobei das druckübertragende Medium Kaliumbromid ist.

14. Verfahren nach einem der Ansprüche 1 bis 8, wobei das druckübertragende Medium Natriumchlorid ist.

15. Verfahren nach einem der Ansprüche 1 bis 8, wobei das druckübertragende Medium Kaliumchlorid ist.

16. Verfahren nach einem der Ansprüche 1 bis 8, wobei das druckübertragende Medium Cäsiumchlorid ist.

17. Verfahren nach einem der Ansprüche 1 bis 8, wobei das druckübertragende Medium Cäsiumbromid ist.

18. Verfahren nach einem der Ansprüche 1 bis 8, wobei das druckübertragende Medium Kupferchlorid ist.

19. Verfahren nach einem der Ansprüche 1 bis 8, wobei das druckübertragende Medium Kupferbromid ist.

## Revendications

1. Procédé de changement de la couleur d'un diamant de type IIb gris en bleu ou d'amélioration de la couleur bleue d'un diamant de type IIb, comprenant les étapes consistant à:
(i) créer une masse réactionnelle en mettant le diamant dans un milieu de transmission de pression qui entoure complètement le diamant; et
(ii) soumettre la masse réactionnelle à une température dans le domaine de 2000°C à 2500°C sous une pression de 6,7 GPa à 9 GPa pour une période de temps allant de 10 minutes à 15 heures.

2. Procédé selon la revendication 1, dans lequel dans l'étape (ii) la masse réactionnelle est soumise à la température et à la pression pendant environ 1 heure.

3. Procédé selon une quelconque des revendications 1 ou 2, dans lequel la température dans l'étape (ii) est de 2200°C à 2500°C.

4. Procédé selon une quelconque des revendications précédentes, dans lequel la pression dans l'étape (ii) est de 7,6 GPa à 8,4 GPa.

5. Procédé selon une quelconque des revendications précédentes, dans lequel avant que le diamant n'ait été soumis à la température et à la pression, le spectre ultraviolet/visible du diamant présente une absorption augmentant de manière monotone en force avec la réduction de la longueur d'onde, et dans lequel après que le diamant ait été soumis à la température et à la pression, le diamant possède un spectre qui présente une réduction de l'absorption dans les longueurs d'onde courtes.

6. Procédé selon la revendication 5, dans lequel après que le diamant ait été soumis à la température et à la pression, le diamant possède un spectre qui présente une absorption accrue dans la partie rouge du spectre visible provoquée en partie par une augmentation de la concentration de bore non compensé.

7. Procédé selon une quelconque des revendications précédentes, dans lequel une pluralité de diamants est placée dans le milieu de transmission de pression, chaque diamant étant séparé de son voisin par le milieu de transmission de pression.

8. Procédé selon une quelconque des revendications précédentes, dans lequel le milieu de transmission de pression est un milieu homogène qui entoure complètement le ou chaque diamant et est appliqué sur toute la surface du ou de chaque diamant.

9. Procédé selon une quelconque des revendications précédentes, dans lequel le milieu de transmission de pression possède une faible résistance au cisaillement.

10. Procédé selon une quelconque des revendications précédentes, dans lequel le milieu de transmission de pression est soluble dans l'eau.

11. Procédé selon une quelconque des revendications précédentes, dans lequel le milieu de transmission de pression est un sel d'halogénure métallique.

12. Procédé selon la revendication 11, dans lequel l'halogénure est un chlorure ou un bromure.

13. Procédé selon une quelconque des revendications 1 à 8, dans lequel le milieu de transmission de pression est du bromure de potassium.

14. Procédé selon une quelconque des revendications 1 à 8, dans lequel le milieu de transmission de pression est du chlorure de sodium.

15. Procédé selon une quelconque des revendications 1 à 8, dans lequel le milieu de transmission de pression est du chlorure de potassium.

16. Procédé selon une quelconque des revendications 1 à 8, dans lequel le milieu de transmission de pression est du chlorure de césium.

17. Procédé selon une quelconque des revendications 1 à 8, dans lequel le milieu de transmission de pression est du bromure de césium.

18. Procédé selon une quelconque des revendications 1 à 8, dans lequel le milieu de transmission de pression est du chlorure de cuivre.

19. Procédé selon une quelconque des revendications 1 à 8, dans lequel le milieu de transmission de pression est du bromure de cuivre.
